(19) Europäisches Patentamt
European Patent Office
Office européen des brevets

(11) EP 2 683 934 B1

## (12) EUROPÄISCHE PATENTSCHRIFT

(45) Veröffentlichungstag und Bekanntmachung des Hinweises auf die Patenterteilung:
**06.05.2015 Patentblatt 2015/19**

(21) Anmeldenummer: **12712878.3**

(22) Anmeldetag: **12.03.2012**

(51) Int Cl.:
*F16H 48/34* (2012.01)     *H02K 7/00* (2006.01)
*F03B 11/06* (2006.01)     *F03D 11/02* (2006.01)
*F03D 9/00* (2006.01)     *F03D 11/00* (2006.01)
*H02K 7/18* (2006.01)

(86) Internationale Anmeldenummer:
**PCT/AT2012/000062**

(87) Internationale Veröffentlichungsnummer:
**WO 2012/119171 (13.09.2012 Gazette 2012/37)**

(54) **ENERGIEGEWINNUNGSANLAGE**

ENERGY GENERATING INSTALLATION

DISPOSITIF DE PRODUCTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2011 AT 3312011**

(43) Veröffentlichungstag der Anmeldung:
**15.01.2014 Patentblatt 2014/03**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**WO-A2-2008/061263     WO-A2-2010/135754**
**DE-A1-102007 047 317**

**Beschreibung**

Die Erfindung betrifft eine Energiegewinnungsanlage, insbesondere Windkraftanlage, mit einer Antriebswelle, einem Generator und mit einem Differenzialgetriebe mit drei An- bzw. Abtrieben, wobei ein erster Antrieb mit der Antriebswelle, ein Abtrieb mit einem Generator und ein zweiter Antrieb mit einem Differenzial-Antrieb verbunden ist, wobei ein Hohlradträger mit einer Generatorwelle verbunden ist.

Windkraftanlagen gewinnen zunehmend an Bedeutung als Elektrizitätserzeugungsanlagen. Dies und eine aufgrund der zunehmenden Anlagengröße hotwendige Mittelspannungs-Leistungselektrik legen den Einsatz von direkt mit dem Netz verbundenen, fremderregten Mittelspannungs-Synchrongeneratoren nahe. Um den Nachteil der fixen Drehzahl von direkt netzgekoppelten Synchrongeneratoren zu kompensieren besteht die Möglichkeit Differenzial-Antriebe einzusetzen.

Die Nachteile bekannter Ausführungen sind jedoch eine meist komplexe Mechanik und damit erhöhte Komponenten- bzw. Wartungskosten. Ein weiterer wichtiger Punkt ist ein kompaktes Gesamtdesign des Systems, um das Maschinenhaus möglichst klein zu gestalten.

Die WO 2010/135754 A zeigt, wie ein Differenzialgetriebe möglichst platzsparend an einen Generator angebunden werden kann. Die darin beschriebene technische Lösung erlaubt zwar einen kompakten Anschluss des Hohlrades der Differenzialstufe an die Generatorwelle, die Nachteile sind jedoch, dass die massen-und magnetisierungsbedingten Verformungen der Generatorwelle in das Differenzialgetriebes übertragen werden und dort unerwünschte Verformungen in den beteiligten Bauteilen der Differenzialstufe bewirken. Dadurch entsteht eine Achsneigung der Differenzialstufe, welche sich negativ auf das Tragbild auswirkt. Ein zuverlässiger und vibrations- bzw. lärmoptimierter Dauerbetrieb ist damit nicht mehr gewährleistet, beziehungsweise entsteht die Gefahr von massivem Verschleiß in den Laufverzahnungen.

Aufgabe der Erfindung ist oben genannte Nachteile soweit wie möglich zu vermeiden und einen Differenzial-Antrieb zur Verfügung zu stellen, welcher neben geringen Abmessungen auch eine zuverlässige und formstabile Anbindung des Differenzialgetriebes an die Welle des Generators gewährleistet.

Gelöst wird diese Aufgabe bei einer Energiegewinnungsanlage der eingangs genannten Art erfindungsgemäß dadurch, dass die Generatorwelle über den Hohlradträger an einem Gehäuse des Generators gelagert ist.

Dadurch ist eine sehr kompakte und effiziente Bauweise der Anlage möglich, mit der darüber hinaus auch keine wesentlichen negativen Einflüsse auf das Tragbild der Differenzialstufe der Energieerzeugungsanlage, insbesondere Windkraftanlage, verursacht werden.

Bevorzugte Ausführungsformen der Erfindung sind Gegenstand der übrigen Unteransprüche.

Nachfolgend werden bevorzugte Ausführungsformen der Erfindung unter Bezugnahme auf die angeschlossenen Zeichnungen detailliert beschrieben.

Fig. 1 zeigt das Prinzip eines Differenzialgetriebes mit einem elektrischen Differenzial-Antrieb gemäß Stand der Technik,

Fig. 2 zeigt eine erfindungsgemäße Ausführungsform einer Differenzialstufe im Zusammenhang mit vorliegender Erfindung,

Fig. 3 zeigt eine erfindungsgemäße Ausführungsform der Lagerung des Hohlrades der Differenzialstufe.

Die Leistung des Rotors einer Windkraftanlage errechnet sich aus der Formel

```
Rotor-Leistung = Rotorfläche * Leistungsbeiwert *
Windgeschwindigkeit3 * Luftdichte / 2
```

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zwischen 7 und 9) ausgelegt. Aus diesem Grund ist beim Betrieb der Windkraftanlage im Teillastbereich eine entsprechend kleine Drehzahl des Rotors einzustellen, um einen optimalen aerodynamischen Wirkungsgrad zu gewährleisten.

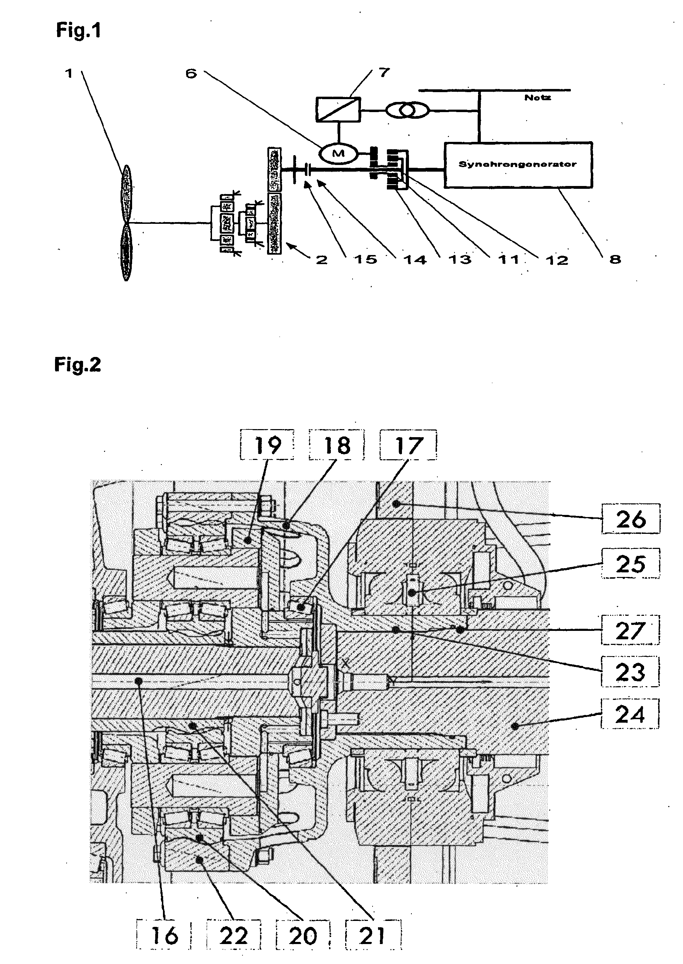

Fig. 1 zeigt ein mögliches Prinzip eines elektromechanischen Differenzialsystems mit einer Differenzial-Getriebestufe 11 bis 13, einer Anpassungs-Getriebestufe 3 und einem Differenzial-Antrieb 6. Der Differenzial-Antrieb 6 kann wahlweise ein elektrischer oder hydrodynamischer oder hydrostatischer Antrieb sein. Der Rotor 1 der Windkraftanlage, treibt das Hauptgetriebe 2 an. Das Hauptgetriebe 2 ist meist ein 3-stufiges Getriebe mit zwei Planetenstufen und einer Stirnradstufe. Zwischen dem Hauptgetriebe 2 und einem Generator 8 befindet sich eine Differenzialstufe 11 bis 13, welche vom Hauptgetriebe 2 über den Planetenträger 12 der Differenzialstufe angetrieben wird. Zwischen Hauptgetriebe 2 und der Differenzialstufe 11 bis 13 befinden sich meist eine Kupplung 14 und eine Hauptbremse 15. Der Generator 8 - vorzugsweise ein Synchrongenerator - ist mit dem Hohlrad 13 der Differenzialstufe 11 bis 13 verbunden und wird von diesem angetrieben. Das Ritzel 11 der Differenzialstufe 11 bis 13 ist über eine oder mehrere Anpassungs-Getriebestufe(n) 3 mit dem Differenzial-Antrieb 6 verbunden. Die Drehzahl des Differenzial-Antriebes 6 wird geregelt, um einerseits bei variabler Drehzahl des Rotors 1 eine konstante Drehzahl des Generators 8 zu gewährleisten und andererseits das Drehmoment im kompletten Triebstrang der Windkraftanlage zu regeln. Der Differenzial-Antrieb 6 ist vorzugsweise eine Niederspannungs-Drehstrommaschine, welche über einen Frequenzumrichter 7 und einen Transformator 5 an ein Netz angeschlossen wird.

Um den Differenzial-Antrieb 6 mit optimaler Drehzahl bzw. Drehmoment betreiben zu können, ist es möglich die Anpassungs-Getriebestufe(n) 3 zwischen der Differenzialstufe 11 bis 13 und dem Differenzial-Antrieb 6, wie die WO 2008/061263 A zeigt, als Verstellgetriebe mit einer oder alternativ auch mit mehreren Schaltstufen auszuführen und damit verschiedene Übersetzungsverhältnisse zu realisieren. Dabei ist bei Einsatz eines elektromechanischen Differenzialsystems die Verbindung des in der WO 2008/061263 A genannten "stufenlos regelbaren Getriebes" mit dem generatorseitigen Abtrieb des Differenzialgetriebes nicht notwendig, da der elektrische Differenzial-Antrieb 6 seine Energie vom Netz bezieht bzw. in dieses abgibt. Beim Schaltern von einer Übersetzung in eine andere ist es sinnvoll, den Schaltvorgang lastfrei durchzuführen, indem man zum Beispiel das Drehmoment im Differenzial-Antrieb und damit im gesamten Triebstrang auf ungefähr Null regelt.

Als Alternative zu den Schaltstufen des Verstellgetriebes wäre es auch möglich einen polschaltbaren Differenzial-Antrieb 6 einzusetzen.

Die WO 2010/135754 A zeigt eine Konstruktion wie ein Differenzialgetriebe platzsparend an einen Generator angebunden werden kann. Dabei werden (a) die Lagerung des Planetenträgers, (b) die Verbindung der Tragkonstruktion des Hohlrades (Hohlradträger) mit der Generatorwelle und (c) die Lagerung des Generators hintereinander am antriebsseitigen Ende der Generatorwelle angeordnet. Die zweite Planetenträger-Lagerung ist via Generatorlager und Generator-/Getriebegehäuse mit der Generatorwelle und demzufolge auch mit dem Hohlrad und der ersten Planetenträger-Lagerung verbunden.

Die Generatorwelle ist aufgrund des großen Gewichtes und der Magnetkräfte des Rotors des Generators 8 entsprechend großen Querkräften ausgesetzt, welche zwar von den Generatorlagern aufgenommen werden, jedoch eine Durchbiegung der Rotorwelle bewirken. Als Folgeerscheinung hat das Wellenende der Generatorwelle gegenüber der Drehachse eine Winkelneigung. Für die Ausführung gemäß WO 2010/135754 A bedeutet dies, dass die Lagerung des Planetenträgers, der Hohlradträger und die Lagerung. des Generators verschiedene Winkelstellungen einnehmen und dadurch, als Folgeerscheinung für die Verzahnungsgeometrie der Differenzialstufe, die erwünschten Positionsgenauigkeiten bezüglich Achsneigung nicht erreicht werden. Gemeinsam mit den Fertigungstoleranzen führt dies zu erhöhtem Verschleiß und unerwünschten Schwingungen bzw. Schallemissionen.

Fig. 2 zeigt eine erfindungsgemäße Ausführungsform der Anbindung des Differenzialgetriebes 11 bis 13 an die Generatorwelle 24. Die mit dem Rotor 1 verbundene Antriebswelle 16 treibt den Planetenträger 19 an, der mittels einer Planetenträger-Lagerung 17 im Hohlradträger 18 gelagert ist. Im Planetenträger 19 sind die Planeten 20 gelagert und diese treiben wiederum das Ritzel 21 und das Hohlrad 22 an. Der Hohlradträger 18 ist einerseits mittels einer Welle-Nabenverbindung 23, welche vorzugsweise eine formschlüssigen Welle-Nabenverbindung beziehungsweise eine Zahnwellenverbindung nach DIN 5480 ist, mit der Generatorwelle 24 verbunden und trägt andererseits das antriebsseitige Generatorlager 25, welches vom Lagerdeckel 26 des Gehäuses des Generators 8 aufgenommen wird. Anstelle einer zwei- oder mehrteiligen Ausführung des Hohlradträgers 18 mit dem Hohlrad 22 können diese auch einteilig ausgeführt sein.

Ein wesentlicher Vorteil dieser Konstruktion ist, dass bei dem auftretenden Winkelversatz dieser nicht in die vorgeschaltete Differenzialstufe übertragen werden kann, da die ausgeführte Welle-Nabenverbindung 23 nur Drehmomente und keine Biegemomente übertragen kann. Die Welle-Nabenverbindung 23 wird vorzugsweise mit nur einer Zentrierung 27 als Gelenkverbindung ausgeführt. Das Hohlrad 22 und der Planetenträger 18 werden dadurch über die Laufverzahnung der Differenzialstufe und dem Generatorlager 25 annähernd unabhängig von der Generator-Wellenbiegung geführt. Dies führt zu einem optimalen Tragbild in der Differenzialstufe.

Wie schon oben beschrieben wird auch der Planetenträger 19 mittels der Planetenträger-Lagerung 17 im Hohlradträger 18 gelagert, wodurch auch auf diesen ein Winkelversatz der Generatorwelle keinen direkten Einfluss hat und dadurch eine optimale Positionsgenauigkeit der Verzahnungsteile gewährleistet ist.

Neben den positiven Auswirkungen auf die Verzahnung hat diese Konstruktion den zusätzlichen Vorteil, dass die Anbindung der Differenzialstufe an die Generatorwelle 24 sehr kurz ist, da das Generatorlager 25 und die Welle-Nabenverbindung 23 vorzugsweise übereinander, d.h. in einer Radialebene, oder zumindest sehr eng beieinander liegen. Das Generatorlager 25 und die Welle-Nabenverbindung 23 liegen im Sinne der vorliegenden Erfindung dann in einer Radialebene, wenn Abschnitte, Elemente öder Bauteile des Generatorlagers 25 einerseits und der Welle-Nabenverbindung 23 andererseits in einer gemeinsamen Radialebene liegen.

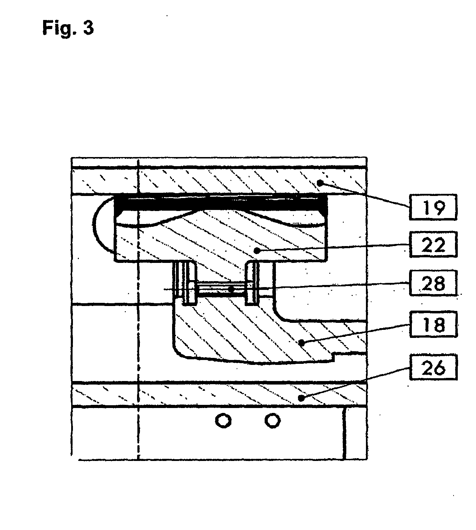

Fig. 3 zeigt eine weitere Möglichkeit einer Verbindung zwischen dem Hohlradträger 18 und dem Hohlrad 22. Im Gegensatz zur form- bzw. kraftschlüssigen Schraubverbindung gemäß Fig.2 wurde hier eine Verbindung mit einer Welle-Nabenverbindung 28, vorzugsweise auch hier einer formschlüssigen Zahnwellenverbindung nach DIN 5480, gewählt. Diese Art der Verbindung hat den Vorteil, dass sich das Hohlrad 22 aufgrund der Zahnkräfte besser verformen und dadurch eine bessere Lastverteilung auf die Planeten 20 beziehungsweise auf die Laufverzahnung erreicht werden kann.

## Patentansprüche

1.   Energiegewinnungsanlage, insbesondere Windkraftanlage, mit einer Antriebswelle, einem Generator (8) und mit einem Differenzialgetriebe (11 bis 13) mit drei An- bzw. Abtrieben, wobei ein erster Antrieb mit der Antriebswelle, ein Abtrieb mit einem Generator (8) und ein zweiter Antrieb mit einem Differenzial-Antrieb (6) verbunden (23) ist, wobei ein Hohlradträger (18) mit einer Generatorwelle (24) verbunden ist, **dadurch gekennzeichnet, dass** die Generatorwelle (24) über den Hohlradträger (18) an einem Gehäuse (26) des Generators (8) gelagert (25) ist.

2.   Energiegewinnungsanlage nach Anspruch 1, **dadurch gekennzeichnet, dass** die Verbindung zwischen Hohlradträger (18) und Generatorwelle (24) eine formschlüssige Welle-Nabenverbindung (23), vorzugsweise eine Zahnwellenverbindung nach DIN 5480, ist.

3.   Energiegewinnungsanlage nach Anspruch 1, **dadurch gekennzeichnet, dass** die Verbindung zwischen Hohlradträger (18) und Generatorwelle (24) eine kraftschlüssige Welle-Nabenverbindung ist.

4.   Energiegewinnungsanlage nach einem der Ansprüche 1 bis 3, **dadurch gekennzeichnet, dass** ein Planetenträger (12, 19) mittels eines Lagers (17) am Hohlradträger (18) gelagert ist.

5.   Energiegewinnungsanlage nach einem der Ansprüche 2 bis 4, **dadurch gekennzeichnet, dass** die formschlüssige Welle-Nabenverbindung (23), insbesondere die Zahnwellenverbindung, eine nur einseitige Zentrierung (27) hat.

6.   Energiegewinnungsanlage nach Anspruch 5, **dadurch gekennzeichnet, dass** die Zentrierung (27) auf der vom Differenzialgetriebe (11 bis 13) abgewandten Seite der formschlüssigen Welle-Nabenverbindung (23) angeordnet ist.

7.   Energiegewinnungsanlage nach einem der Ansprüche 1 bis 6, **dadurch gekennzeichnet, dass** die Verbindung (23) zwischen dem Hohlradträger (18) und der Generatorwelle (24) einerseits und dem Lager (25) zwischen dem Hohlradträger (18) und dem Gehäuse (26) des Generators (8) andererseits in einer Radialebene liegen.

8.   Energiegewinnungsanlage nach einem der Ansprüche 1 bis 7, **dadurch gekennzeichnet, dass** die Verbindung zwischen Hohlradträger (18) und Hohlrad (22) eine formschlüssige Welle-Nabenverbindung (28), vorzugsweise eine Zahnwellenverbindung nach DIN 5480, ist.

9.   Energiegewinnungsanlage nach einem der Ansprüche 1 bis 8, **dadurch gekennzeichnet, dass** der Differenzial-Antrieb (6) eine elektrische Maschine ist.

10.  Energiegewinnungsanlage nach Anspruch 9, **dadurch gekennzeichnet, dass** die elektrische Maschine eine permanentmagneterregte Synchronmaschine ist.

## Claims

1.   Energy generating installation, especially a wind power station, with a drive shaft, a generator (8) and with a differential transmission (11 to 13) with three drives and outputs, respectively, a first drive being connected to the drive shaft, one output being connected to a generator (8), and a second drive being connected (23) to a differential drive (6), a ring gear carrier (18) being connected to a generator shaft (24), **characterized in that** the generator shaft (24) is mounted (25) via the ring gear carrier (18) on a housing (26) of the generator (8).

2.   Energy generating installation according to Claim 1, **characterized in that** the connection between the ring gear carrier (18) and the generator shaft (24) is a positive shaft-hub connection (23), preferably an external spline connection according to DIN 5480.

**3.** Energy generating installation according to Claim 1, **characterized in that** the connection between the ring gear carrier (18) and the generator shaft (24) is a nonpositive shaft-hub connection.

**4.** Energy generating installation according to one of Claims 1 to 3, **characterized in that** a planetary carrier (12, 19) is mounted on the ring gear carrier (18) by means of a bearing (17).

**5.** Energy generating installation according to one of Claims 2 to 4, **characterized in that** the positive shaft-hub connection (23), especially the external spline connection, has only unilateral centering (27).

**6.** Energy generating installation according to Claim 5, **characterized in that** the centering (27) is located on the side of the positive shaft-hub connection (23) facing away from the differential transmission (11 to 13).

**7.** Energy generating installation according to one of Claims 1 to 6, **characterized in that** the connection (23) between the ring gear carrier (18) and the generator shaft (24), on the one hand, and the bearing (25) between the ring gear carrier (18) and the housing (26) of the generator (8), on the other hand, lie in one radial plane.

**8.** Energy generating installation according to one of Claims 1 to 7, **characterized in that** the connection between the ring gear carrier (18) and the ring gear (22) is a positive shaft-hub connection (28), preferably an external spline connection according to DIN 5480.

**9.** Energy generating installation according to one of Claims 1 to 8, **characterized in that** the differential drive (6) is an electrical machine.

**10.** Energy generating installation according to Claim 9, **characterized in that** the electrical machine is a permanent magnet-excited synchronous machine.


## Revendications

**1.** Dispositif de production d'énergie, en particulier éolienne, avec un arbre d'entraînement, un générateur (8), et avec une transmission différentielle (11 à 13) avec trois et/ou entrées ou sorties, une première entrée étant reliée (23) à l'arbre d'entraînement, une sortie à un générateur (8) et une deuxième entrée à une entraînement différentielle (6), un porte-couronne (18) étant relié à un arbre de générateur (24), **caractérisé en ce que** l'arbre de générateur (24) est logé (25) sur un carter (26) du générateur (8) par l'intermédiaire du porte-couronne (18).

**2.** Dispositif de production d'énergie selon la revendication 1, **caractérisé en ce que** la liaison entre le porte-couronne (18) et l'arbre de générateur (24) est une liaison arbre/moyeu par conjugaison de formes (23), de préférence une liaison par cannelures selon la norme DIN 5480.

**3.** Dispositif de production d'énergie selon la revendication 1, **caractérisé en ce que** la liaison entre le porte-couronne (18) et l'arbre de générateur (24) est une liaison arbre/moyeu par conjugaison de forces.

**4.** Dispositif de production d'énergie selon l'une des revendications 1 à 3, **caractérisé en ce qu'**un porte-satellites (12, 19) est logé sur le porte-couronne (18) au moyen d'un palier (17).

**5.** Dispositif de production d'énergie selon l'une des revendications 2 à 4, **caractérisé en ce que** la liaison arbre/moyeu par conjugaison de formes (23), en particulier la liaison par cannelures, possède un centrage (27) d'un seul côté seulement.

**6.** Dispositif de production d'énergie selon la revendication 5, **caractérisé en ce que** le centrage (27) est disposé sur le côté tournant le dos à la transmission différentielle (11 à 13) de la liaison (23) arbre/moyeu par conjugaison de formes.

**7.** Dispositif de production d'énergie selon l'une des revendications 1 à 7, **caractérisé en ce que** la liaison (23) entre le porte-couronne (18) et l'arbre de générateur (24) d'un côté, et le palier (25) entre le porte-couronne (18) et le carter (26) du générateur (8) de l'autre côté, se situent dans un plan radial.

**8.** Dispositif de production d'énergie selon l'une des revendications 1 à 7, **caractérisé en ce que** la liaison entre le porte-couronne (18) et la couronne (22) est une liaison arbre/moyeu par conjugaison de formes (28), de préférence une liaison par cannelures selon la norme DIN 5480.

9. Dispositif de production d'énergie selon l'une des revendications 1 à 8, **caractérisé en ce que** l'entrée différentielle (6) est une machine électrique.

10. Dispositif de production d'énergie selon la revendication 9, **caractérisé en ce que** la machine électrique est une machine synchrone excitée par aimant permanent.

**Fig.1**

**Fig.2**

**Fig. 3**

**IN DER BESCHREIBUNG AUFGEFÜHRTE DOKUMENTE**

**In der Beschreibung aufgeführte Patentdokumente**

- WO 2010135754 A
- WO 2008061263 A